## Europäisches Patentamt
## European Patent Office
## Office européen des brevets

(19)

(11) Numéro de publication : **0 044 230**
**B1**

(12)

# FASCICULE DE BREVET EUROPÉEN

(45) Date de publication du fascicule du brevet :
21.03.84

(51) Int. Cl.³ : **H 04 L 27/18**

(21) Numéro de dépôt : **81400937.9**

(22) Date de dépôt : **12.06.81**

(54) **Procédé et dispositif pour lever l'ambiguïté de phase dans une liaison à modulation de phase quadrivalente.**

(30) Priorité : **11.07.80 FR 8015505**

(43) Date de publication de la demande :
**20.01.82 Bulletin 82/03**

(45) Mention de la délivrance du brevet :
**21.03.84 Bulletin 84/12**

(84) Etats contractants désignés :
**DE GB IT**

(56) Documents cités :
**US-A- 3 736 507**
**US-A- 3 809 817**
**US-A- 3 855 533**
**US-A- 3 931 472**

(73) Titulaire : **SOCIETE ANONYME DE TELECOMMUNI-CATIONS**
**41, rue Cantagrel**
**F-75624 Paris Cedex 13 (FR)**

(72) Inventeur : **Acx, Maurice**
**28, avenue de Normandie .**
**F-22300 Lannion (FR)**

(74) Mandataire : **Cabinet Martinet**
**62, rue des Mathurins**
**F-75008 Paris (FR)**

Jouve, 18, rue St-Denis, 75001 Paris, France

# 0 044 230

## Procédé et dispositif pour lever l'ambiguïté de phase dans une liaison à modulation de phase quadrivalente

La présente invention concerne un procédé pour lever l'ambiguïté de phase entre deux signaux numériques démodulés transmis par une liaison à modulation et démodulation de phase quadrivalente par deux porteuses en quadrature à la même fréquence, recevant deux signaux numériques initiaux. Elle a trait également à un dispositif pour la mise en œuvre de ce procédé.

Un tel dispositif est utilisé, en tant que circuits de codage et de décodage, particulièrement dans les modems pour liaisons hertziennes. Dans la partie émission d'un modem, le circuit de codage reçoit généralement deux signaux numériques initiaux obtenus par conversion série-parallèle d'un signal numérique donné et fait correspondre à chaque paire d'éléments binaires une polarité sur l'une des deux voies sortantes en fonction de la loi de codage, par exemple du genre codage par transitions. Puis, les deux signaux délivrés par le circuit de codage modulent dans le circuit de modulation deux porteuses en quadrature à la même fréquence. Chacun des quatre niveaux de phase correspond à un groupe de l'une des combinaisons de deux éléments binaires reçus par le circuit de modulation. Après mélange des deux signaux modulés en quadrature de phase, le signal résultant est transmis vers la partie réception d'un autre modem, par exemple à travers une liaison troposphérique. Dans le circuit de démodulation de la partie réception, le signal résultant est démodulé en deux signaux transmis par deux démodulateurs recevant deux porteuses en quadrature issues d'une même porteuse reconstituée à partir de circuits à verrouillage de phase qui sont calés sur la fréquence des signaux démodulés. Puis les deux signaux démodulés sont appliqués à un circuit de régénération dit également circuit de décision qui délivre les deux signaux numériques au circuit de décodage, lequel a ses sorties reliées à un convertisseur parallèle-série fournissant le signal numérique donné.

Pour l'opération de démodulation, il est évidemment nécessaire de connaître exactement la phase de référence de l'onde porteuse, ce qui implique une connaissance très précise de la fréquence de l'onde porteuse. On utilise actuellement différents procédés pour déterminer avec précision la fréquence de cette onde porteuse. Ainsi, pour une modulation à 4 phases, on peut, en multipliant en fréquence le signal reçu par 4, faire apparaître une raie à une fréquence égale à 4 fois la fréquence porteuse, que l'on utilise pour asservir un oscillateur à fréquence contrôlable. La fréquence ainsi obtenue est ensuite divisée par 4 pour retrouver la fréquence de l'onde porteuse. D'autres procédés dits « en bande de phase » tels que la boucle de Costas permettent également la récupération de la porteuse.

Dans tous les cas, en ce qui conerne la phase de référence de l'onde porteuse, une ambiguïté dont la valeur est un multiple de $\pi/2$ existe.

Deux procédés sont couramment utilisés pour effectuer la levée d'ambiguïté : le codage à saut de phases différentiel ou l'introduction d'un « mot » caractéristique dans les deux signaux numériques initiaux (US-A-3 736 507).

Par exemple, pour le codage par transitions, c'est la transition ou la non-transition entre deux états consécutifs du signal qui est significative, ces deux états du signal étant ceux définis par le codage direct du signal numérique, tel que le codage dit non retour à zéro ou dit retour à zéro, le codage biphase, le codage polaire ou bipolaire avec retour à zéro.

Ces deux procédés effectuent la levée d'ambiguïté sur le signal régénéré, c'est-à-dire après remise en forme des deux signaux modulés par le circuit de régénération et de décision de la partie réception.

Plus particulièrement, de tels procédés selon lequel le levée d'ambiguïté est effectuée après régénération sont divulgués dans le US-A-3 809 817 et le US-A-3 931 472 (qui est une continuation — in — part du US-A-3 809 817). Le premier de ces brevets enseigne deux types de procédé. Un premier procédé fait appel à deux codages ou brouillages distincts des deux canaux numériques pendant une trame récurrente. Un second procédé a trait à deux modulations à fréquences basses différentes respectivement des deux signaux initiaux numériques. Un troisième procédé, décrit dans le second brevet, est fondé sur un principe analogue à celui du second procédé, à savoir une différence de débits entre les deux signaux initiaux et l'introduction périodique d'un bit de justification dans le canal ayant le débit le plus élevé. Tous ces procédés n'autorisent pas une combinaison linéaire en diversité et modifient considérablement les signaux initiaux.

La présente invention a pour but de fournir un procédé et un dispositif de levée d'ambiguïté de phase pour lesquels les signaux numériques initiaux dans les signaux démodulés sont reconnus avant régénération.

Le procédé selon l'invention ne nécessite pas de moyens complexes, tels que brouilleur, circuit d'insertion de bits de justification ou modulateur de fréquence, pour distinguer les signaux initiaux à la réception. Ces conditions permettent avantageusement de transmettre une combinaison linéaire de deux signaux numériques indépendants par exemple dans le cas d'une liaison en diversité et de les distinguer sans ambiguïté de phase à la réception. L'application particulière à une liaison dite en diversité concerne une liaison transmettant deux signaux identiques entre un émetteur et deux récepteurs adjacents ayant des antennes réceptrices à longueurs d'onde différentes ou entre une paire d'émetteurs et une paire de récepteurs à fréquences différentes.

Le codage selon le procédé est fondé sur un « marquage » de l'un des signaux numériques initiaux à l'émission qui contribue à distinguer les polarités des signaux numériques démodulés à la réception. Ce

2

marquage est réalisé en retardant l'un des types de fronts montants et descendants du signal numérique initial à marquer, ce qui se traduit par une sensible modification de la phase de l'onde porteuse associée. Ce retard ou déphasage est de l'ordre d'une faible fraction de la période de rythme des signaux numériques, par exemple un dizième.

A cette fin, le procédé pour lever l'ambiguïté de phase entre deux signaux numériques démodulés transmis par une liaison à modulation et démodulation de phase quadrivalente par deux porteuses en quadrature à la même fréquence, recevant deux signaux numériques initiaux, est caractérisé en ce que l'un des signaux numériques initiaux a ses fronts montants (ou descendants) qui sont retardés d'une fraction (t) de la période de rythme des signaux et en ce que les différences de la phase des fronts montants (ou descendants) de l'un des signaux démodulés avec les phases des fronts montants et descendants de l'autre signal démodulé sont comparées à des valeurs prédéterminées de l'ordre de ladite fraction (t) et de son opposé (− t) afin d'inverser ou non les deux signaux démodulés, ou de les commuter et inverser l'un des deux signaux démodulés en fonction de l'ambiguïté de phase traduite par lesdites comparaisons.

Le dispòsitif pour la mise en œuvre du procédé précédent relatif à une liaison comprenant au moins un circuit de modulation de phase quadrivalente sur deux porteuses en quadrature à la même fréquence dont les entrées reçoivent les deux signaux numériques initiaux et dont la sortie transmet le signal résultant du mélange des deux signaux modulés en quadrature de phase, un circuit de démodulation effectuant la démodulation correspondante du signal résultant pour produire sur ses deux sorties les deux signaux numériques démodulés, des moyens d'aiguillage reliés aux deux sorties du circuit de démodulation et des moyens pour commander les moyens d'aiguillage, est caractérisé en ce qu'il comprend des moyens de retard recevant l'un des signaux numériques initiaux et reliés à l'une des entrées du circuit de modulation pour retarder les fronts montants (ou descendants) de ce signal initial de ladite fraction (t), des moyens reliés aux deux sorties du circuit de démodulation pour détecter les fronts montants (ou descendants) de l'un des signaux démodulés et les fronts montants et descendants de l'autre signal démodulé, des moyens de différenciation de phase reliés aux moyens de détection pour produire les deux différences de phase entre les fronts montants (ou descendants) et les fronts montants, d'une part, et les fronts descendants, d'autre part, respectivement des deux signaux, et des moyens reliés aux moyens de différenciation de phase pour comparer les différences de phase à des valeurs prédéterminées fonction de ladite fraction (t) afin de discriminer la mise en phase et le retard ou l'avance relatifs des fronts détectés, et en ce que les moyens d'aiguillage commutent entre eux et/ou inversent l'un ou les deux signaux démodulés et les moyens de commande sont reliés aux moyens de comparaison et de discrimination et commandent les moyens d'aiguillage afin que les signaux démodulés soient respectivement retransmis sans modification, à travers deux inversions, ou à travers une commutation des deux signaux et une inversion de l'un des signaux démodulés en réponse à des différences de phase sensiblement égales à ladite fraction, à zéro, ou à ladite fraction et à zéro.

D'autres caractéristiques et avantages de la présente invention apparaîtront plus clairement à la lecture de la description qui suit d'un exemple préféré de réalisation et des dessins annexés correspondants, dans lesquels :

la Figure 1 est un bloc-diagramme schématique de la partie émission d'un modem dans laquelle est inclus le circuit de retard du dispositif ;

la Figure 2 est un bloc-diagramme schématique de la partie réception d'un modem dans laquelle est inclus le circuit de levée d'ambiguïté de phase sur les signaux démodulés avant régénération ;

la Figure 3 est un diagramme de forme d'ondes des signaux numériques initiaux et du signal marqué ;

la Figure 4 montre en détail une réalisation du circuit de marquage ; et

la Figure 5 montre en détail une réalisation du circuit de levée d'ambiguïté de phase.

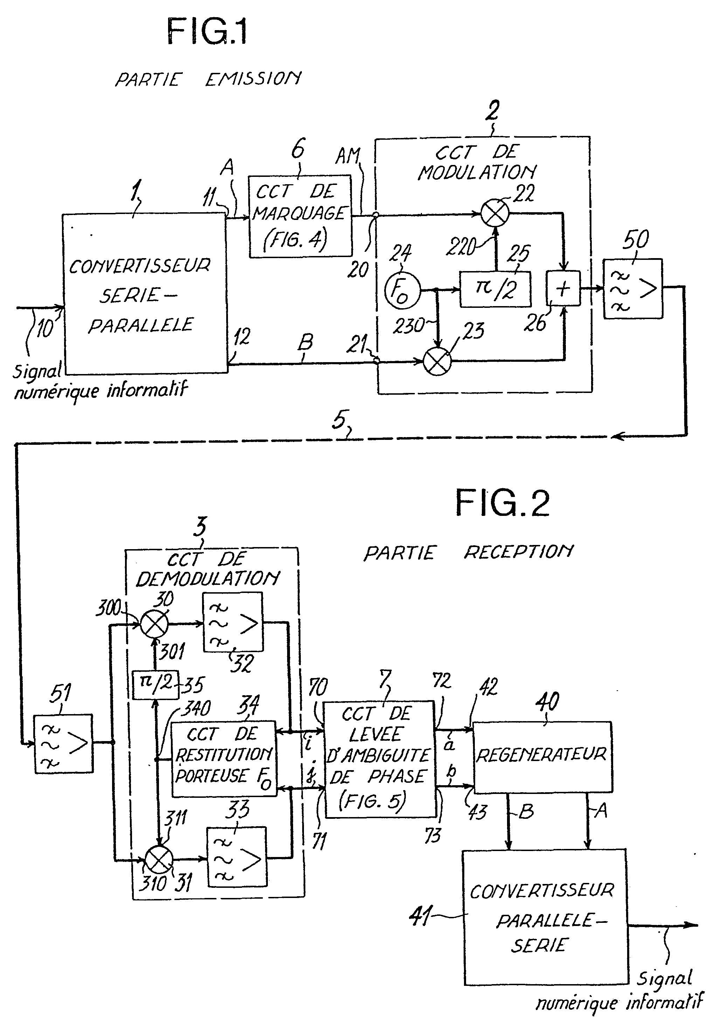

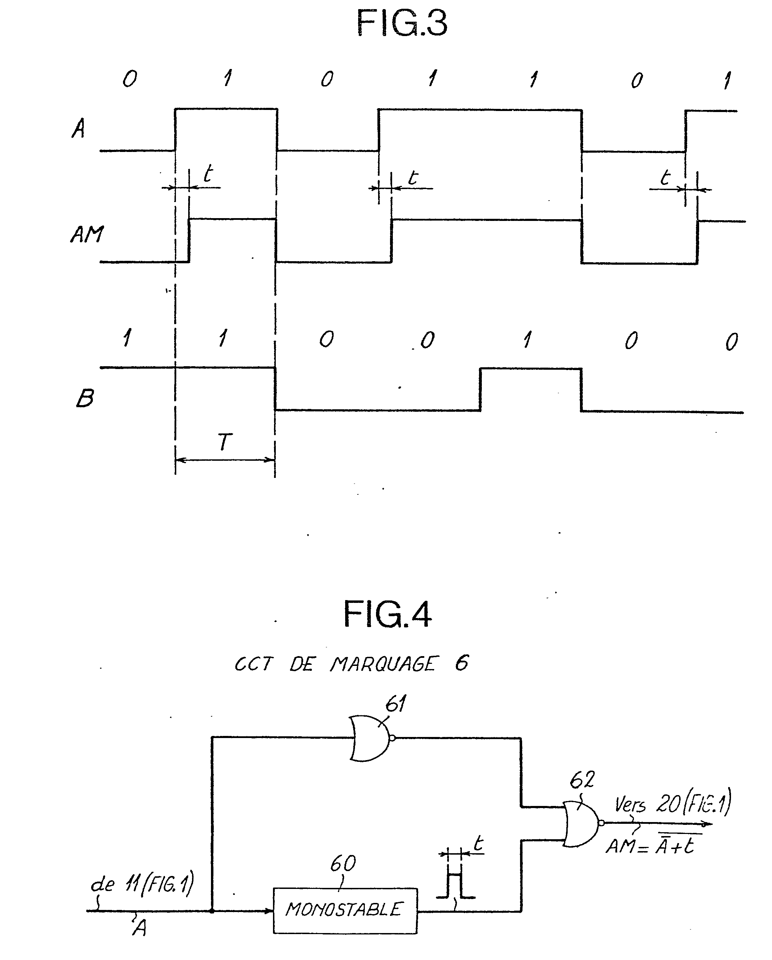

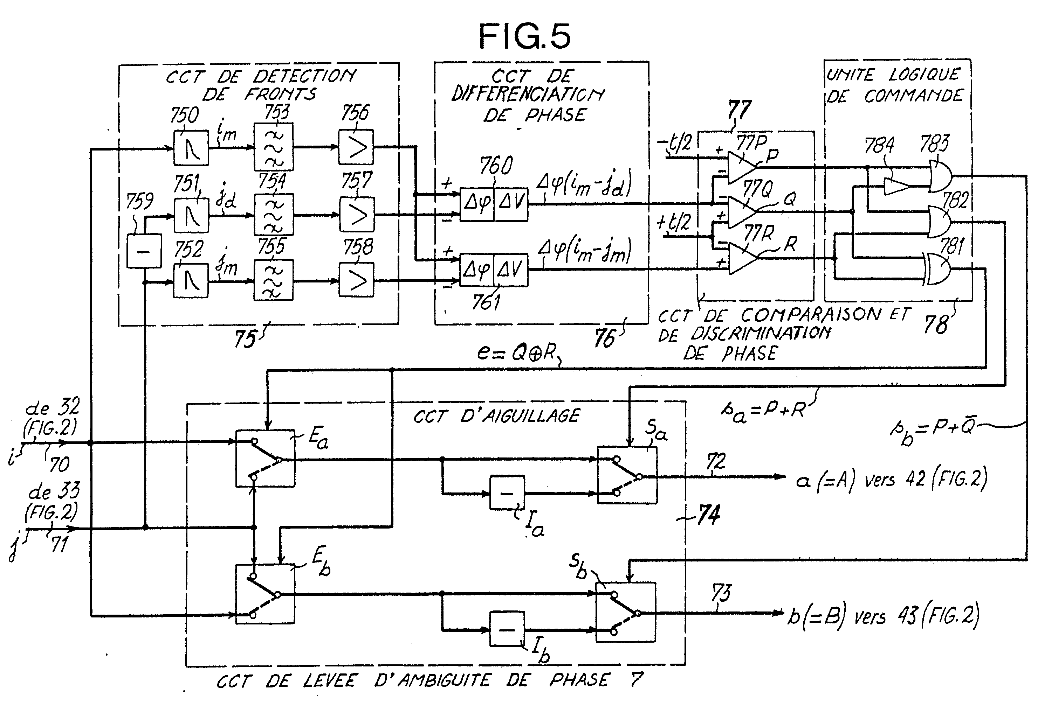

Les Figs 1 et 2 montrent schématiquement l'organisation des parties émission et réception d'un modem selon l'invention. On y retrouve classiquement, comme dans les modems connus qui ne comprennent pas de moyens pour différencier les signaux numériques initiaux à l'émission et des moyens pour lever l'ambiguïté de phase à la réception, dans la partie émission de la Fig. 1, un convertisseur série-parallèle 1 et un circuit de modulation 2 et, dans la partie réception de la Fig. 2, un circuit de démodulation 3, un régénérateur 40 et un convertisseur parallèle-série 41. On rappellera d'abord brièvement les principales fonctions de ces circuits classiques.

L'entrée 10 du convertisseur série-parallèle 1 reçoit un signal numérique informatif sérialisé et ses sorties 11 et 12 délivrent deux signaux numériques synchrones dits initiaux A et B sous forme polaire correspondant à un démultiplexage par paire du signal reçu. Le premier digit binaire d'une paire est assigné au signal A et le second digit binaire de cette paire est assigné au signal B. Selon les modems de l'art antérieur, les deux signaux initiaux A et B subissent un même codage dans deux circuits de codage (non représentés dans la Fig. 1) qui délivrent deux signaux codés aux entrées 20, 21 d'un circuit de modulation de phase quadrivalente 2.

Chaque entrée 20, 21 du circuit de modulation 2 est reliée à l'une des entrées d'un modulateur de phase 22, 23 dont l'autre entrée 220, 230 reçoit respectivement l'une des porteuses en quadrature à la même fréquence $F_0$. La porteuse à la fréquence $F_0$ est produite par un oscillateur local 24 dont la sortie est reliée directement à l'entrée 230 du modulateur 23 et, à travers un déphaseur à 90°, 25, à l'entrée 220

3

**0 044 230**

de l'autre modulateur 22. Par exemple, le signal sortant du modulateur 23 est la porteuse déphasée de 0°, resp. de 180°, lorsque le digit présenté à son entrée 21 correspond à un « 1 », resp. à un « 0 ». De même, toujours selon cet exemple, le signal sortant du modulateur 22 est la porteuse déphasée de 90°, resp. de − 90°, lorsque le digit présenté à son entrée 20 correspond à un « 1 », resp. à un « 0 . Les signaux modulés sortant des modulateurs 22 et 23 sont sommés dans un circuit d'addition 26 dont la sortie transmet le signal résultant à modulation de phase quadrivalente + 45°, + 135°, − 135° et − 45° vers la voie de transmission 5, qui peut être du type hertzien, à travers des circuits annexes de sortie 50, tels que filtre passe-bande et amplificateurs.

Dans la partie réception (Fig. 2), le signal résultant modulé transmis par la voie 5 traverse des circuits annexes d'entrée 51, tels que filtre passe-bande et préamplificateurs, pour être appliqué aux deux entrées 300, 310 de deux démodulateurs 30, 31 qui sont inclus dans le circuit de démodulation 3. Les sorties des démodulateurs 30, 31 sont reliées, pour un modem de l'art antérieur, à travers deux circuits respectifs de filtrage en bande de base et d'amplification 32 et 33, aux entrées 42, 43 du régénérateur 40 qui remet en forme les deux signaux démodulés en fonction de seuils de décision. Dans le circuit de démodulation 3, les sorties des circuits 32 et 33 sont également reliées aux entrées d'un circuit de restitution de la porteuse 34. Ce circuit comprend classiquement un discriminateur de phase et des circuits associés pour commander en tension un oscillateur afin de reconstituer à la sortie 340 du circuit 34 la porteuse $F_0$. Cependant, la référence de phase de l'onde porteuse est obtenue à un multiple $\pi/2$ près par rapport à celle de la porteuse du circuit de modulation 2. La sortie 340 est reliée directement à l'autre entrée 311 du démodulateur 31 et, à travers un déphaseur de 90°, 35, à l'autre entrée 301 du démodulateur 30. Les signaux numériques i, j sortant des démodulateurs, c'est-à-dire appliqués aux entrées 42, 43 du régénérateur 40, sont analogues aux deux signaux sortant des circuits de codage de la partie émission, à l'ambiguïté de phase près qui est due à la reconstitution de la porteuse.

Dans la partie réception des modems connus, après régénération dans le régénérateur 40, les signaux transmis démodulés sont décodés dans deux circuits de décodage (non représentés dans la Fig. 2) selon la loi de décodage inverse à la loi de codage, en les deux signaux numériques initiaux A, B. Puis ces derniers sont combinés par multiplexage par paire en le signal numérique informatif à travers le convertisseur parallèle-série 41.

On voit sur les Fig. 1 et 2, que le modem selon l'invention comprend, en tant que circuit de codage, un circuit de marquage 6 qui est interconnecté sur l'une des voies composantes de la partie émission et, en tant que circuit de décodage, un circuit de levée d'ambiguïté de phase 7 qui est introduit entre le circuit de démodulation 3 et le régénérateur 40 dans la partie réception. Ces circuits, objet de l'invention, permettent dans le cas d'une liaison en diversité, par exemple, la combinaison linéaire des signaux reçus dans la partie réception sans ambiguïté de phase.

Le circuit de marquage 6 est inséré, comme montré à la Fig. 1, sur l'une des voies entre le convertisseur série-parallèle 1 et le circuit de modulation 2, telle que, selon l'exemple illustré, la voie véhiculant le signal A entre la sortie 11 du convertisseur 1 et l'entrée 20 du circuit de modulation 2. Le circuit de marquage 6 permet de distinguer le signal A du signal B, en retardant les fronts montants, ou descendants, du signal A. Ceci permettra à la réception de distinguer les deux signaux numériques et de déterminer les polarités.

En se référant à la Fig. 3, on a représenté, sur les première et troisième lignes, deux formes d'onde qui sont représentatives des signaux numériques synchrones A et B. La seconde ligne montre la forme d'onde du signal marqué AM qui est obtenu par un retard prédéterminé t de fronts, ici montants, du signal numérique A. Ce retard t est petit par rapport à l'intervalle T occupé par un bit des signaux A et B et est choisi de sorte qu'il n'entraîne pratiquement pas une détérioration du taux d'erreur binaire des signaux transmis qui dépend principalement du rapport signal de la porteuse à signal de bruit. Typiquement t est égal à T/10.

La Fig. 4 montre un exemple de réalisation du circuit de marquage 6. Il est de préférence organisé autour d'une bascule monostable 60 qui produit une impulsion de durée t en réponse à un front montant appliqué sur son entrée.

Selon l'exemple montré à la Fig. 4, le circuit 6 comprend également un inverseur 61 et une porte NON-OU 62. Les entrées de la bascule 60 et de l'inverseur 61 sont reliées à la sortie 11 du convertisseur série-parallèle 1. La porte NON-OU 62 a ses entrées qui sont reliées respectivement aux sorties de l'inverseur 61 et de la bascule monostable 60 et a sa sortie reliée à l'entrée 20 du circuit de modulation 2. L'entrée 20 reçoit donc le signal marqué AM (Fig. 3, seconde ligne) tel que $AM = \overline{A} + t$, où t désigne le signal impulsionnel qui est délivré par la bascule monostable 60. La même fonction logique peut être également réalisée par d'autres circuits logiques, tels que par exemple un inverseur inséré entre la sortie de la bascule monostable et une entrée d'une porte ET dont l'autre entrée reçoit directement le signal A, puisqu'on a $\overline{A} + t = A \times \overline{t}$.

Un exemple préféré de réalisation du circuit de levée d'ambiguïté de phase 7 est montré à la Fig. 5. Les deux bornes d'entrée 70 et 71 du circuit 7 reçoivent les signaux numériques démodulés i, j qui sont fournis par les circuits de sortie 32, 33 du circuit de démodulation 3. Les deux bornes de sortie 72, 73 du circuit 7 transmettent vers les deux entrées 42, 43 du régénérateur 40 deux signaux numériques a, b qui sont identiques aux signaux initiaux A et B, aux seuils de décision près.

Le circuit 7 comprend un circuit d'aiguillage 74 qui est interconnecté entre la paire de bornes

**0 044 230**

d'entrée 70, 71 et la paire de bornes de sortie 72, 73, et une bouble de commande de ce circuit d'aiguillage. Cette boucle est composée, dans l'ordre suivant à partir des bornes d'entrée 70, 71, d'un circuit de détection de fronts 75, d'un circuit de différenciation de phase 76, d'un circuit de comparaison et de discrimination de phase 77 et d'une unité logique de commande 78.

Le circuit de détection de fronts 75 est composé de trois voies parallèles qui comportent chacune, en série, un différentiateur 750, 751, 752, un filtre passe-bande 753, 754, 755 et un amplificateur 756, 757, 758. L'entrée du différentiateur 750 de la première voie est reliée directement à la borne d'entrée 70 du circuit 7. Les entrées des différentiateurs 751 et 752 des troisième et seconde voies sont reliées directement et à travers un inverseur analogique 759 à l'autre borne d'entrée 71 du circuit 7. Chaque différentiateur délivre au filtre passe-bande associé une impulsion en réponse à un front montant du signal appliqué à son entrée. Les filtres 753, 754 et 755 sont identiques et ont leur bande passante qui est centrée sur la fréquence de rythme 1/T des digits binaires des signaux numériques i, j. Ces filtres présentent un coefficient de surtension approprié pour tenir compte de la densité des transitions des signaux i, j et de la transmission de ceux-ci en présence du bruit.

Deux différentiateurs de phase 760 et 761 sont inclus dans le circuit de différentiation de phase 76. Les entrées directe (+) et inverse (−) du premier différentiateur 760 sont respectivement reliées aux sorties des amplificateurs 756 et 757. Les entrées directe (+) et inverse (−) du second différentiateur 761 sont respectivement reliées aux sorties des amplificateurs 756 et 758. Chaque différentiateur de phase produit sur sa sortie une tension $\Delta V$ qui est proportionnelle à la différence de phase $\Delta \varphi$ des signaux appliqués à ses entrées. Sa tension de sortie $\Delta V$ est positive si $\Delta \varphi \geqslant 0$, c'est-à-dire si le signal appliqué sur son entrée directe (+) est en avance ou en phase par rapport au signal appliqué sur son entrée inverse (−), et est négative dans le cas contraire, ce qui correspond à $\Delta \varphi < 0$.

Le circuit de comparaison et de discrimination de phase 77 comprend trois comparateurs de tension 77P, 77Q et 77R dont les sorties P, Q, R sont reliées respectivement aux trois entrées de l'unité logique 78. Le premier comparateur 77P compare la tension de sortie du différentiateur de phase 760 à une tension prédéterminée qui est représentative d'un déphasage de référence égal à − t/2. Le second comparateur 77Q compare la tension de sortie du différentiateur de phase 760 à une autre tension prédéterminée qui est l'opposée de la tension précédente et représentative d'un déphasage de référence égal à + t/2. Le troisième comparateur 77R compare la tension de sortie de l'autre différentiateur de phase 761 à la tension prédéterminée + t/2. Selon l'exemple illustré, la tension prédéterminée − t/2 est appliquée à l'entrée directe (+) du comparateur 77P et l'autre tension prédéterminée + t/2 est appliquée à l'entrée directe (+) du comparateur 77Q et à l'entrée inverse (−) du comparateur 77R. La sortie du différentiateur de phase 760 alimente les entrées inverses (−) des comparateurs 77P et 77Q. La sortie du différentiateur de phase 761 alimente l'entrée directe (+) du comparateur 77R. La sortie P, Q, R de chaque comparateur de tension est à l'état « 1 » lorsque la tension appliquée à son entrée directe (+) est supérieure ou égale à la tension appliquée à son entrée (−), et est à l'état « 0 » dans le cas contraire.

Le circuit d'aiguillage 74 comprend une paire de commutateurs d'entrée analogiques Ea, Eb et une paire de commutateurs de sortie analogique Sa, Sb, ainsi que deux paires de voies parallèles sélectionnables entre les deux paires de commutateurs. Les commutateurs analogiques ont été représentés schématiquement par des commutateurs à contact mobile ayant deux positions bien que, en pratique, ils sont réalisés par des portes analogiques à transistors ou par des amplificateurs à commande de gain variable.

Dans le circuit d'aiguillage 74, les paires de voies entre la borne d'entrée 70 et la borne de sortie 72 et entre la borne d'entrée 71 et la borne de sortie 73 sont identiques. Chaque paire de voies comprend un commutateur d'entrée Ea, resp. Eb, dont les premier et second contacts fixes sont reliés aux bornes d'entrée 70, 71, resp. 71, 70, un commutateur de sortie Sa, resp. Sb dont les premier et second contacts fixes sont reliés au contact mobile du commutateur d'entrée Ea, resp. Eb directement et à travers un inverseur analogique Ia, resp. Ib et dont le contact mobile est relié à la borne de sortie 72, resp. 73. Les deux commutateurs d'entrée Ea et Eb sont commandés simultanément par un signal de commande qui est délivré par une sortie e de l'unité logique 78. Les deux commutateurs de sortie Sa et Sb sont commandés par deux signaux de commande qui sont délivrés par les deux autres sorties sa et sb de l'unité logique 78, respectivement.

On considérera dans la suite que le contact mobile de chaque commutateur est relié à son premier contact — comme montré en traits pleins sur la Fig. 5 — lorsque son signal de commande est à l'état « 1 », et à son second contact — comme montré en traits interrompus courts sur la Fig. 5 — lorsque son signal de commande est à l'état « 0 ».

Le fonctionnement du processus de levée d'ambiguité de phase, c'est-à-dire de reconnaissance des signaux initiaux A, B, au moyen du circuit 7 est expliqué ci-après. A cause de l'erreur de phase de $\pm \pi/2$ due à la démodulation dans le circuit de démodulation 3, chaque signal i, j peut être l'un des quatre signaux suivants a, b, $\overline{a}$ et $\overline{b}$. a et b représentent les signaux numériques initiaux A et B avant régénération et $\overline{a}$ et $\overline{b}$ sont les signaux inverses de a et b. Par conséquent, l'une des quatre combinaisons de signaux suivantes peut se présenter aux bornes d'entrée 70, 71 du circuit 7 :

1) i = a et j = b ou
2) i = $\overline{a}$ et j = $\overline{b}$ ou

5

3) i = b et j = $\overline{a}$ ou
4) i = $\overline{b}$ et j = a

La dérivation du front montant, ou bien descendant, d'un signal démodulé i, j au moyen d'un différentiateur 750, 751, 752 fournit un signal impulsionnel dont la fréquence est égale à la fréquence 1/T des digits binaires des signaux i, j et dont la phase est liée à la phase du front. Selon l'exemple illustré, le premier différentiateur 750 fournit un signal impulsionnel $i_m$ en réponse aux fronts montants du signal i, et les second et troisième différentiateurs 751 et 752 fournissent des signaux impulsionnels $j_d$ et $j_m$ en réponse respectivement aux fronts descendants et aux fronts montants du signal j. Après filtrages et amplifications dans les filtres 753, 754 et 755 et les amplificateurs 756, 757 et 758, la comparaison des phases des signaux $i_m$ et $j_d$ dans le différentiateur de phase 760 et la comparaison des phases des signaux $i_m$ et $j_m$ dans le différenciateur de phase 761 se traduisent par les informations nécessaires et suffisantes pour la levée d'ambiguïté qui est commandée et sélectionnée par l'unité logique 78. La comparaison des différences de phase $\Delta\varphi(i_m - j_d)$ et $\Delta\varphi(i_m - j_m)$ qui sont produites par les différentiateurs 760 et 761, aux phases de référence t/2 et − t/2 dans les comparateurs 77P, 77Q et 77R permet de distinguer avec précision le sens de l'erreur de phase $\pi/2$ ou − $\pi/2$ et si le retard ou l'avance est égal à t, c'est-à-dire plus grand que + t/2.

Relativement aux quatre combinaisons des signaux i, j précédemment définies, on obtient :

1) i = a et j = b si $\Delta\varphi(i_m - j_d) < - t/2$ et/ou $\Delta\varphi(i_m - j_m) < - t/2$,

c'est-à-dire pratiquement si $\Delta\varphi(i_m - j_d) = \Delta\varphi(i_m - j_m) = - t$ ce qui correspond aux états respectifs 1, 1 et 0 des sorties P, Q, R des comparateurs 77P, 77Q et 77R ; le signal $i_m$ est donc en retard de t par rapport aux signaux $j_m$ et $j_d$ ; les trois signaux de commande e, sa, sb produits par l'unité logique 78 sont à l'état 1 et positionnent les contacts mobiles des commutateurs Ea à Sb, comme illustré en traits pleins à la Fig. 5 ; les signaux i et j sont transmis uniquement à travers ces quatre commutateurs vers les bornes de sortie 72 et 73.

2) i = $\overline{a}$ et j = $\overline{b}$ si $|\Delta\varphi(i_m - j_d)| < t/2$ et/ou $|\Delta\varphi(i_m - j_m)| < t/2$, et $\Delta\varphi(i_m - j_d) > - t/2$

c'est-à-dire si pratiquement les signaux $i_m$, $j_d$ et $j_m$ sont en phase, ce qui correspond aux états respectifs 0, 1 et 0 des sorties P, Q, R des comparateurs 77P, 77Q et 77R ; le signal de commande e sortant de l'unité 78 est à l'état 1 et positionne les contacts mobiles des commutateurs d'entrée Ea et Eb dans les états illustrés en traits pleins à la Fig. 5, tandis que les signaux de commande sa, sb sont inversés par rapport à la première combinaison et positionnent les contacts mobiles des commutateurs de sortie Sa et Sb dans les états illustrés en traits interrompus courts à la Fig. 5 ; les signaux i et j sont donc respectivement inversés dans les inverseurs Ia et Ib.

3) i = b et j = a si $\Delta\varphi(i_m - j_d) > t/2$,

c'est-à-dire si pratiquement $i_m$ est en avance de t par rapport à $j_d$ et est en phase avec le signal $j_m$, ce qui correspond à des sorties des comparateurs 77P, 77Q et 77R à l'état 0 ; le signal de commande e sortant de l'unité 78 est à l'état 0 et les positions des contacts mobiles des commutateurs d'entrée Ea et Eb sont également inversés par rapport à la première combinaison, comme illustré en traits interrompus courts ; les signaux de commande sa et sb sont aux états respectifs 0 et 1 afin que le contact mobile du commutateur de sortie Sa soit relié à l'inverseur Ia pour inverser le signal j tandis que le contact mobile du commutateur de sortie Sb est relié directement au contact mobile du commutateur d'entrée Eb pour retransmettre le signal i vers la borne 73.

4) i = $\overline{b}$ et j = a si $\Delta\varphi(i_m - j_m) > t/2$,

c'est-à-dire si pratiquement $i_m$ est en avance de t par rapport à $j_m$ et est en phase avec le signal $j_d$, ce qui correspond aux états respectifs 0,1 et 1 des sorties P, Q, R des comparateurs 77P, 77Q et 77R ; le signal de commande e sortant de l'unité 78 est à l'état 0 et positionne les contacts mobiles des commutateurs d'entrée Ea, Eb comme selon la combinaison 3) et l'illustration en traits interrompus courts, tandis que les positions des commutateurs de sortie Sa et Sb sont inversés par rapport à la troisième combinaison précédente : le signal j est transmis directement de la borne d'entrée 71 vers la borne de sortie 72 tandis que le signal i est transmis à travers l'inverseur Ib de la borne d'entrée 70 vers la borne de sortie 73.

Le tableau suivant résume la levée d'ambiguïté de phase pour chacune des combinaisons précédentes :

| Combinaison | 1 | 2 | 3 | 4 |
|---|---|---|---|---|
| i | a | $\bar{a}$ | b | $\bar{b}$ |
| j | b | $\bar{b}$ | $\bar{a}$ | a |
| $\Delta\varphi\ (i_m - j_d)$ | $-t$ | 0 | t | 0 |
| $\Delta\varphi\ (i_m - j_m)$ | $-t$ | 0 | 0 | $\tau$ |
| P | 1 | 0 | 0 | 0 |
| Q | 1 | 1 | 0 | 1 |
| R | 0 | 0 | 0 | 1 |
| $e = Q \oplus R$ <br> Ea et Eb | 1 ╲ | 1 ╲ | 0 ╱ | 0 ╱ |
| $sa = P + R$ <br> Sa | 1 ╲ | 0 ╱ | 0 ╱ | 1 ╲ |
| $sb = P + \bar{Q}$ <br> Sb | 1 ╲ | 0 ╱ | 1 ╲ | 0 ╱ |

Dans ce tableau, on a indiqué un exemple de solution pour déduire le signal de commande e des commutateurs Ea, Eb, d'une part, et les signaux de commande sa, sb des commutateurs de sortie Sa, Sb d'autre part. Dans ce cas l'unité logique 78 comprend une porte OU-Exclusif 781 entre les entrées Q et R et la sortie e pour réaliser la fonction $e = Q \oplus R$, une porte OU 782 entre les entrées P et R et la sortie sa pour réaliser la fonction $sa = P + R$ et une seconde porte OU 783 pour réaliser la fonction $sb = P + \bar{Q}$ dont les entrées sont reliées directement à l'entrée P et, à travers un inverseur 784, à l'entrée Q et dont la sortie est sb.

On notera que, notamment, les conventions de signe et la réalisation décrites ci-dessus relatives au circuit de marquage 6 (Fig. 4) et au circuit de levée d'ambiguïté de phase 7 (Fig. 5) ne sont pas limitatives et que d'autres réalisations facilement concevables par l'homme du métier rentrent dans le cadre des revendications annexées, sans que cela modifie le résultat cherché, à savoir obtenir les signaux numériques initiaux A et B en entrée du régénérateur 40 quelle que soit l'ambiguïté de phase due à la démodulation.

Bien que le dispositif soit plus complexe, le procédé selon l'invention peut être appliqué à une modulation à $2^N$ phases équiréparties. Par exemple pour la modulation à huit états de phase, les fronts montants ou descendants de l'un des trois signaux numériques issus du démultiplexage en triplet du signal numérique informatif sont marqués dans la partie émission. Dans ce cas, le circuit de levée d'ambiguïté de phase de la partie réception comprend sept circuits de détection de fronts et six différentiateurs de phase ainsi que des moyens de comparaison et de discrimination de phase et des moyens logiques de commande appropriés pour commander trois paires de commutateurs qui sont inclus dans le circuit d'aiguillage.


## Revendications

1. Procédé pour lever l'ambiguïté de phase entre deux signaux numériques démodulés (i, j) transmis

7

**0 044 230**

par une liaison (2, 5, 3) à modulation et démodulation de phase quadrivalente par deux porteuses en quadrature à la même fréquence ($F_0$), recevant deux signaux numériques initiaux (A, B), caractérisé en ce que l'un des signaux numériques initiaux (A) a ses fronts montants (ou descendants) qui sont retardés d'une fraction (t) de la période de rythme des signaux et en ce que les différences de phase des fronts montants (ou descendants) de l'un des signaux démodulés (i) avec les phases des fronts montants et descendants de l'autre signal démodulé (j) sont comparées à des valeurs prédéterminées de l'ordre de ladite fraction (t) et de son opposé ( − t) afin d'inverser ou non les deux signaux démodulés (i, j), ou de les commuter et inverser l'un des signaux démodulés (i, j) en fonction de l'ambiguïté de phase traduite par lesdites comparaisons.

2. Dispositif pour lever l'ambiguïté de phase pour la mise en œuvre du procédé conforme à la revendication 1, relatif à une liaison comprenant au moins un circuit de modulation de phase quadrivalente (2) sur deux porteuses en quadrature à la même fréquence ($F_0$) dont les entrées (20, 21) reçoivent les deux signaux numériques initiaux (C, D) et dont la sortie (26, 50) transmet le signal résultant du mélange des deux signaux modulés en quadrature de phase, un circuit de démodulation (3) effectuant la démodulation correspondante du signal résultant pour produire sur ses deux sorties (32, 33) les deux signaux démodulés (i, j), des moyens d'aiguillage (74) reliés aux deux sorties (32, 33) du circuit de démodulation (3) et des moyens (78) pour commander les moyens d'aiguillage (74), caractérisé en ce que le dispositif comprend des moyens de retard (6) recevant l'un des signaux numériques initiaux (A) et reliés à l'une des entrées (20) du circuit de modulation (2) pour retarder les fronts montants (ou descendants) de ce signal initial de ladite fraction (t), des moyens (75) reliés aux deux sorties (32, 33) du circuit de démodulation (3) pour détecter les fronts montants (ou descendants) de l'un des signaux démodulés (i) et les fronts montants et descendants de l'autre signal démodulé (j), des moyens de différenciation de phase (76) reliés aux moyens de détection (75) pour produire les deux différences de phase entre les fronts montants (ou descendants) et les fronts montants, d'une part, et les fronts descendants, d'autre part, respectivement des deux signaux, et des moyens (77) reliés aux moyens de différentiation de phase (76) pour comparer les différences de phase à des valeurs prédéterminées (± t/2) fonction de ladite fraction (t) afin de discriminer la mise en phase et le retard ou l'avance relatifs des fronts détectés, et en ce que les moyens d'aiguillage (74) commutent entre eux et/ou inversent l'un ou les deux signaux démodulés (i, j) et les moyens de commande (78) sont reliés aux moyens de comparaison et de discrimination (77) et commandent les moyens d'aiguillage (74) afin que les signaux démodulés (i, j) soient respectivement retransmis sans modification, à travers deux inversions ou à travers une commutation des deux signaux et une inversion de l'un des signaux démodulés (i, j) en réponse à des différences de phase sensiblement égales à ladite fraction, à zéro, ou à ladite fraction et à zéro.

3. Dispositif conforme à la revendication 2, caractérisé en ce que les moyens de retard (6) comprennent une bascule monostable (60) à constante de temps égale à ladite fraction (t) qui est déclenchable par les fronts montants (ou descendants) du signal initial à retarder (A) et un circuit logique (61, 62) qui réalise la fonction logique $\overline{At}$ entre le signal initial à retarder A et les impulsions t délivrées par la bascule (60).

4. Dispositif conforme à la revendication 2 ou 3, caractérisé en ce que ladite fraction (t) est de l'ordre du dixième de la période de rythme (T) des signaux numériques.

5. Dispositif conforme à l'une des revendications 2 à 4, caractérisé en ce que les moyens de détection des fronts (75) comprennent trois voies parallèles ($i_m$, $j_d$, $j_m$) qui sont respectivement reliées à l'une des sorties (32, 70) du circuit de démodulation (3) et, à travers un inverseur analogique (759) et directement, à l'autre sortie (33, 71) du circuit de démodulation et qui comprennent chacune un différentiateur (750, 751, 752) pour délivrer une impulsion en réponse à un front montant (ou descendant) du signal reçu sur la voie.

6. Dispositif conforme à la revendication 5, caractérisé en ce que chaque voie des moyens de détection de fronts (75) comprend, à la suite du différentiateur (750, 751, 752) un filtre passe-bande (753, 754, 755) centré sur la fréquence de rythme des signaux numériques qui est éventuellement en série avec un amplificateur (756, 757, 758).

7. Dispositif conforme à l'une des revendications 2 à 6, caractérisé en ce que les moyens de différentiation de phase (76) comprennent deux différenciateurs de phase (760, 761) qui produisent chacun une tension de sortie ($\Delta V$) proportionnelle à la différence de phase ($\Delta\varphi$) des signaux appliqués sur ses entrées, dont une entrée commune reçoit les fronts montants (ou descendants) détectés de l'un des signaux transmis ($i_m$) et dont les autres entrées reçoivent respectivement les fronts descendants et montants détectés de l'autre signal transmis ($j_d$, $j_m$).

8. Dispositif conforme à l'une des revendications 2 à 7, caractérisé en ce que les moyens de comparaison et de discrimination (77) comprennent au moins trois comparateurs dont deux (77P, 77Q) comparent l'une des deux différences de phase ($\Delta\varphi(i_m - j_d)$) à deux valeurs prédéterminées (± t/2) et dont l'autre (77R) compare l'autre différence de phase ($\Delta\varphi(i_m - j_m)$) à une autre valeur prédéterminée (+ t/2).

9. Dispositif conforme à l'une des revendications 2 à 8, caractérisé en ce que les valeurs prédéterminées sont représentatives de déphasages inférieurs en valeur absolue à ladite fraction t, de préférence égale à + t/2 et − t/2.

10. Dispositif conforme à l'une des revendications 2 à 9, dans lequel les moyens d'aiguillage (74) comprennent deux moyens de commutation d'entrée (Ea ; Eb) qui ont chacun deux entrées (70, 71) reliées aux sorties (32, 33) du circuit de démodulation (3), caractérisé en ce que les moyens d'aiguillage (74) comprennent deux inverseurs analogiques (la ; lb) qui sont reliés respectivement aux sorties des moyens de commutation d'entrée (Ea ; Eb) et deux moyens de commutation de sortie (Sa ; Sb) qui ont chacun deux entrées reliées respectivement à un moyen de commutation d'entrée (Ea ; Eb) et à l'inverseur associé (la ; lb).

11. Dispositif conforme à la revendication 10, caractérisé en ce que les moyens de commande (78) comprennent des moyens (781) pour commander les moyens de commutation d'entrée (Ea ; Eb) à une position de transmission directe, resp. de transmission par commutation des deux signaux transmis (i, j) lorsque les deux différences de phase sont sensiblement égales, resp. différentes, et des moyens (782, 783, 784) pour commander les moyens de commutation de sortie à une position telle qu'ils sont reliés aux sorties des moyens de commutation d'entrée, resp. aux inverseurs lorsque les deux différences de phase sont sensiblement égales à ladite fraction (t), resp. à zéro, et à une position telle que l'un est relié à la sortie des moyens de commutation d'entrée associés (Ea ; Eb) et l'autre à l'inverseur associé (la ; lb) et inversement, respectivement lorsque les deux différences de phase sont différentes.

12. Modem comprenant, dans la partie émission, un convertisseur série-parallèle (1) d'un signal numérique informatif en deux signaux numériques (A, B) et un circuit de modulation de phase quadrivalente (2) et dans la partie réception, un circuit de démodulation de phase quadrivalente (3) et un régénérateur à seuils de décision (40), caractérisé en ce qu'il comprend un dispositif de levée d'ambiguïté de phase conforme à l'une des revendications 2 à 11 dont les moyens de retard (6) sont insérés, en tant que moyens de codage, sur l'une des deux voies reliant le convertisseur (1) au circuit de modulation (3) et dont les autres moyens (7) sont insérés, en tant que moyens de décodage, sur les deux voies reliant le circuit de démodulation (3) au régénérateur (40).

## Claims

1. Method for resolving phase ambiguity between two demodulated digital signals (i, j) transmitted from a quadriphase modulation and demodulation link by means of two carriers in phase quadrature at the same frequency ($F_0$), receiving two initial digital signals (A, B), characterized in that one of the initial digital signals (A) has its rise (or fall) fronts delayed by a fraction (t) of the rhythm period of the signals and in that the phase differences in the rise (or fall) fronts of one of the demodulated signals (i) with the phases of the rise and fall fronts of the other demodulated signal (j) are compared against predetermined values of the order of said fraction (t) and the opposite thereof ($-t$) in order to invert the two demodulated signals (i, j) or not, or to switch them and invert one of the demodulated signals (i, j) in terms of the phase ambiguity translated by said comparisons.

2. Phase ambiguity resolving arrangement for carrying out the method according to claim 1, relative to a link comprising at least a quadriphase modulating circuit (2) with two carriers in phase quadrature at the same frequency ($F_0$), the inputs (20, 21) of said quadriphase modulating circuit receiving the two initial digital signals (C, D) and the output (26, 50) of said quadriphase modulating circuit transmitting the signal resulting from mixing the two modulated signals in phase quadrature, a demodulating circuit (3) performing the corresponding demodulation of the resulting signal to produce the two demodulated signals (i, j) at its two outputs (32, 33), switching means (74) connected to the two outputs (32, 33) from the demodulating circuit (3), and means (78) for controlling the switching means (74), characterized in that the arrangement comprises delay means (6) receiving one of the initial digital signals (A) and connected to one of the inputs (20) of the modulating circuit (2) for delaying the rise (or fall) fronts of this initial signal by said fraction (t), means (75) connected to the two outputs (32, 33) of the demodulating circuit (3) for detecting the rise (or fall) fronts of one of the demodulated signals (i) and the rise and fall fronts of the other demodulated signal (j), phase subtracting means (76) connected to the detecting means (75) for producing the two phase difference between the rise (or fall) fronts and the rise fronts, on the one hand, and the fall fronts, on the other, respectively for the two signals, and means (77) connected to the phase subtracting means (76) for comparing the phase differences against predetermined values ($\pm t/2$) dependent on said fraction (t) in order to discriminate the phasing and the relative delay or advance of the detected fronts, and in that the switching means (74) interswitch and/or invert one or both of the demodulated signals (i, j) and the controlling means (78) are connected to the comparing and discriminating means (77) and control the switching means (74) such that the demodulated signals (i, j) are respectively retransmitted with no modification, through two inversions or through one switching of the two signals and one inversion of one of the demodulated signals (i, j) in response to phase differences substantially equal to said fraction, to zero, or to said fraction and to zero.

3. Arrangement according to claim 2, characterized in that the delay means (6) comprise a monostable flip-flop (60) that has a time constant equal to said fraction (t) and that is triggerable by the rise (or fall) fronts of the initial signal (A) to be delayed, and a logic circuit (61, 62) that performs the logic function At between the initial signal to be delayed A and the pulses t delivered by the flip-flop (60).

4. Arrangement according to claim 2 or 3, characterized in that said fraction (t) is of the order of one tenth the rhythm period (T) of the digital signals.

5. Arrangement in accordance with one of claims 2 to 4, characterized in that the front detecting means (75) comprise three parallel channels ($i_m$, $j_d$, $j_m$) that are respectively connected to one of the outputs (32, 70) of the demodulating circuit (3) and, via an analog inverter (759) and directly, to the other output (33, 71) of the demodulating circuit and that each comprise a differentiator (750, 751, 752) for delivering a pulse in response to a rise (or fall) front of the signal received in the channel.

6. Arrangement according to claim 5, characterized in that each channel in the front detecting means (75) comprises, after the differentiator (750, 751, 752), a bandpass filter (753, 754, 755) centered on the rhythm frequency of the digital signals that is possibly in series with an amplifier (756, 757, 758).

7. Arrangement according to one of claims 2 to 6, characterized in that the phase subtracting means (76) comprise two phase differentiators (760, 761) that each produce an output voltage ($\Delta V$) proportional to the phase difference ($\Delta\varphi$) of the signals fed into its inputs, one common input of which receives the detected rise (or fall) fronts of one of the transmitted signals ($i_m$) and the other inputs of which respectively receive the detected fall and rise fronts of the other transmitted signal ($j_d$, $j_m$).

8. Arrangement according to one of claims 2 to 7, characterized in that the comparing and discriminating means (77), comprise at least three comparators two of which (77P, 77Q) compare one of the two phase differences ($\Delta\varphi$ ($i_m - j_d$)) against two predetermined values ($\pm t/2$) and the other of which (77R) compares the other phase difference ($\Delta\varphi$ ($i_m - j_m$)) against another predetermined value ($\pm t/2$).

9. Arrangement according to one of claims 2 to 8, characterized in that the predetermined values are representative of phase shifts smaller in absolute-value terms than said fraction t, preferably equal to $\pm t/2$ and $- t/2$.

10. Arrangement according to one of claims 2 to 9, in which the switching means (74) comprise two input switching means (Ea ; Eb) that each have two inputs (70, 71) connected to the outputs (32, 33) of the demodulating circuit (3), characterized in that the switching means (74) comprise two analog inverters (Ia ; Ib) that are respectively connected to the outputs of the input switching means (Ea ; Eb), and two output switching means (Sa ; Sb) that each have two inputs respectively connected to an input switching means (Ea ; Eb) and the associated inverter (Ia ; Ib).

11. Arrangement according to claim 10, characterized in that the controlling means (78) comprise means (781) for controlling the input switching means (Ea ; Eb) in a position of direct transmission, resp. transmission by commutation of the two transmitted signals (i, j) when the two phase differences are substantially equal, resp. different, and means (782, 783, 784) for controlling the output switching means in a position such that they are connected to the outputs from the input switching means, resp. to the inverters, when the two phase differences are substantially equal to said fraction (t) resp. zero, and in a position such that one is connected to the output from the associated input switching means (Ea ; Eb) and the other to the associated inverter (Ia ; Ib) and reciprocally, respectively when the two phase differences are different.

12. Modem comprising, in the transmitting part, a series-to-parallel converter (1) for one digital information signal into two digital signals (A, B) and a quadriphase modulating circuit (2) and, in the receiving part, a quadriphase demodulating circuit (3) and a decision-threshold regenerator (40), characterized in that it comprises a phase ambiguity resolving arrangement according to one of claims 2 to 11 whose delay means (6) are inserted, as encoding means, in one of the two channels connecting the converter (1) to the modulating circuit (2) and whose other means (7) are inserted, as decoding means, in the two channels connecting the demodulating circuit (3) to the regenerator (40).

## Ansprüche

1. Verfahren zur Phasenzweideutigkeitsauflösung zwischen zwei demodulierten digitalen Signalen (i, j), die in einer mit Tetraphasenmodulation und -demodulation arbeitenden Verbindung (2, 5, 3) für zwei digitale Anfangssignale (A, B) von zwei um 90° phasenverschobenen Trägerwellen mit gleicher Frequenz ($F_0$) übertragen werden, dadurch gekennzeichnet, daß das eine der digitalen Anfangssignale (A) ansteigende (oder fallende) Signalflanken aufweist, die um einen Bruchteil (t) der Signaltakperiode verzögert sind, und daß die Phasenunterschiede der ansteigenden (oder fallenden) Signalflanken des einen demodulierten Signals (i) gegenüber den Phasen der ansteigenden oder fallenden Flanken des anderen demodulierten Signals (j) mit vorbestimmten Werten der Größenordnung des Bruchteils (t) und seines entgegengesetzten Wertes ( $-$ t) verglichen werden, um die beiden demodulierten Signale (i, j) zu invertieren oder nicht zu invertieren, oder um sie zu vertauschen und eines demodulierten Signale (i, j) in Abhängigkeit von der durch die Vergleiche ermittelten Phasenzweideutigkeit zu invertieren.

2. Einrichtung für die Phasenzweideutigkeitsauflösung zur Ausführung des Verfahrens gemäß Anspruch 1 für eine Verbindung, die mindestens eine Tetraphasenmodulationsschaltung (2) für zwei um 90° phasenverschobene Trägerwellen mit gleicher Frequenz ($F_0$) umfaßt, wobei deren Eingänge (20, 21) die beiden digitalen Anfangssignale (C, D) empfangen und deren Ausgang (26, 50) das resultierende Mischsignal der beiden um 90° phasenverschobenen modulierten Signale überträgt, sowie eine Demodulationsschaltung (3) für die entsprechende Demodulation des resultierenden Signals zur Erzeugung zweier demodulierter Signale (i, j) auf ihren beiden Ausgängen (32, 33) und eine Signalweiche (74) umfaßt, welche mit den beiden Ausgängen (32, 33) der Demodulationsschaltung (3) verbunden ist, und schließlich eine Steuereinrichtung (78) für die Signalweiche umfaßt, dadurch gekennzeichnet, daß die Einrichtung eine mit einem der Eingänge (20) der Modulationsschaltung (2) verbundene, das eine der digitalen Anfangssignale (A) aufnehmende Verzögerungseinrichtung (6) für die Verzögerung der ansteigenden (oder fallenden) Signalflanken dieses Signals um den Bruchteil (t) und eine mit den beiden Ausgängen (32, 33) der Demodulationsschaltung (3) verbundene Detektoreinrichtung (75) umfaßt, um die ansteigenden (oder fallenden) Signalflanken des einen demodulierten Signals (i) und die ansteigenden und fallenden Signalflanken des anderen demodulierten Signals (j) festzustellen, sowie eine mit der Detektoreinrichtung (75) verbundene Phasendifferentiationseinrichtung (76) zur Erzeugung der beiden Phasendifferenzen zwischen den ansteigenden (oder fallenden) Signalflanken und den ansteigenden Flanken einerseits sowie den fallenden Flanken andererseits der respektiven beiden Signale und schließlich eine mit der Phasendifferentiationseinrichtung (76) verbundene Komparatoreinrichtung (77) für den Vergleich der Phasendifferenzen mit vorbestimmten Werten ($\pm$ t/2) abhängig von dem Bruchteil (t) umfaßt, um die Phaseneinstellung und die Verzögerung oder das relative Voreilen der festgestellten Flanken zu unterscheiden, und daß die Signalweiche (74) eins oder beide demodulierte Signale (i, j) vertauscht und/oder invertiert, und die Steuereinrichtung (78) mit der Komparator- und Diskriminatoreinrichtung (77) verbunden ist und die Signalweiche (74) so steuert, daß die demodulierten Signale (i, j) ohne Abänderung jeweils rückübertragen werden, entweder durch zwei Inversionen oder durch eine Vertauschung der beiden Signale und eine Inversion des einen der demodulierten Signale (i, j) in Abhängigkeit von Phasenunterschieden, die im wesentlichen gleich dem Bruchteil, gleich Null oder gleich dem Bruchteil und gleich Null sind.

3. Einrichtung nach Anspruch 2, dadurch gekennzeichnet, daß die Verzögerungseinrichtung (6) eine monostabile Kippstufe (60) mit einer Zeitkonstante von der Größe des Bruchteils (t) umfaßt, die durch die ansteigenden (oder fallenden) Signalflanken des zu verzögernden Anfangssignals (A) auslösbar ist, und eine Torschaltung (61/62) umfaßt, welche die logische Verknüpfung A$\bar{t}$ zwischen dem zu verzögernden Anfangssignal A und den von der Kippstufe (60) gelieferten Impulsen t erzeugt.

4. Einrichtung nach Anspruch 2 oder 3, dadurch gekennzeichnet, daß der Bruchteil (t) von der Größenordnung des zehnten Teiles der Taktperiode (T) der digitalen Signale ist.

5. Einrichtung nach einem der Ansprüche 2 bis 4, dadurch gekennzeichnet, daß die Detektoreinrichtung (75) für Signalflanken drei parallele Leitungswege ($i_m$, $j_d$, $j_m$) umfaßt, die jeweils mit einem der Ausgänge (32, 70) der Demodulationsschaltung (3) und über einen Analog-Inverter (759) und direkt mit einem anderen Ausgang (33, 71) der Demodulationsschaltung verbunden sind und die jeweils ein Differentiationselement (750, 751, 752) für die Erzeugung eines Impulses in Abhängigkeit von einer ansteigenden (oder fallenden) Flanke des auf dem Leitungsweg empfangenen Signals umfassen.

6. Einrichtung nach Anspruch 5, dadurch gekennzeichnet, daß jeder Leitungsweg der Flankendetektoreinrichtung (75) nach dem Differentiationselement (750, 751, 752) ein auf die Taktfrequenz der digitalen Signale zentriertes Bandpaßfilter (753, 754, 755) umfaßt, das mit einem Verstärker (756, 757, 758) in Reihe liegen kann.

7. Einrichtung nach einem der Ansprüche 2 bis 6, dadurch gekennzeichnet, daß die Phasendifferentiationseinrichtung (76) zwei Phasendifferentiationselemente (760, 761) umfaßt, die jeweils eine zu der Phasendifferenz ($\Delta\varphi$) der auf ihre Eingänge gegebenen Signale proportionale Ausgangsspannung ($\Delta V$) erzeugen, wobei ein gemeinsamer Eingang die festgestellten ansteigenden (oder fallenden) Flanken des einen der übertragenen Signale ($i_m$) aufnimmt und die beiden anderen Eingänge jeweils die fallenden und ansteigenden festgestellten Flanken des anderen übertragenen Signals ($j_d$, $j_m$) aufnehmen.

8. Einrichtung nach einem der Ansprüche 2 bis 7, dadurch gekennzeichnet, daß die Komparator- und Diskriminatoreinrichtung (77) mindestens drei Komparatoren umfaßt, von denen zwei (77P, 77Q) eine der beiden Phasendifferenzen ($\Delta\varphi(i_m - j_d)$) mit zwei vorbestimmten Werten ($\pm$ t/2) vergleicht und der andere (77R) die andere Phasendifferenz ($\Delta\varphi(i_m - j_m)$) mit einem vorbestimmten Wert (+ t/2) vergleicht.

9. Einrichtung nach einem der Ansprüche 2 bis 8, dadurch gekennzeichnet, daß die vorbestimmten Werte Phasenverschiebungen repräsentieren, deren Absolutwert geringer ist als der Bruchteil t und vorzugsweise gleich + t/2 oder − t/2 ist.

10. Einrichtung nach einem der Ansprüche 2 bis 9, in welcher die Signalweiche (74) zwei Eingangsumschalter (Ea ; Eb) umfaßt, die jeder zwei mit den Ausgängen (32, 33) der Demodulationsschaltung (3) verbundene Eingänge (70, 71) aufweisen, dadurch gekennzeichnet, daß die Signalweiche (74) zwei Analog-Inverter (Ia ; Ib), die jeweils mit den Ausgängen der Eingangsumschalter (Ea ; Eb) verbunden sind, und zwei Ausgangsumschalter (Sa ; Sb) umfaßt, die jeweils zwei mit je einem Eingangsumschalter (Ea ; Eb) und mit dem zugehörigen Inverter (Ia ; Ib) verbundene Eingänge aufweisen.

11. Einrichtung nach Anspruch 10, dadurch gekennzeichnet, daß die Steuereinrichtung (78) eine Umschaltsteuerung (781) für die Steuerung der Eingangsumschalter (Ea ; Eb) in eine direkte Übertragungsstellung bzw. eine Übertragung durch Vertauschung der beiden übertragenen Signale (i, j) umfaßt, wenn die beiden Phasendifferenzen im wesentlichen gleich bzw. unterschiedlich sind, und eine Umschaltsteuerung (782, 783, 784) umfaßt für die Steuerung der Ausgangsumschalter in eine solche Stellung, daß sie mit den Ausgängen der Eingangsumschalter bzw. den Invertern verbunden sind, wenn die Phasendifferenzen im wesentlichen gleich dem Bruchteil (t) bzw. gleich Null sind, und in eine Stellung, daß einer mit dem Ausgang des zugehörigen Eingangsumschalters (Ea ; Eb) und der andere mit dem zugehörigen Inverter (Ia ; Ib) verbunden ist und jeweils umgekehrt, wenn die beiden Phasendiffe-

11

renzen verschieden sind.

12. Modulations- und Demodulationseinrichtung (Modem) mit einem im Sendeteil angeordneten Serien-Parallel-Umsetzer (I) für ein digitales Informationssignal in zwei digitale Signale (A, B) und mit einer Tetraphasenmodulationsschaltung (2) sowie mit einer in dem Empfangsteil angeordneten Tetraphasendemodulationsschaltung (3) und einem mit Verzweigungsschwellen arbeitenden Regenerator (40), dadurch gekennzeichnet, daß sie eine Einrichtung für die Phasenzweideutigkeitsauflösung nach einem der Ansprüche 2 bis 11 umfaßt, wobei die Verzögerungseinrichtung (6), insofern als Kodiereinrichtung, in einem der beiden den Umsetzer (1) mit der Modulationsschaltung (3) verbindenden Leitungswege und dessen andere Einrichtung (7), insofern als Dekodiereinrichtung, in die beiden die Demodulationsschaltung (3) mit dem Regenerator (40) verbindenden Leitungswege eingefügt ist.

# FIG.1

PARTIE EMISSION

# FIG.2

PARTIE RECEPTION

# FIG.3

A

AM

B

$t$    $t$    $t$

$T$

0  1  0  1  1  0  1

1  1  0  0  1  0  0

# FIG.4

CCT DE MARQUAGE 6

61

62

Vers 20 (FIG.1)

$AM = \overline{A} + t$

60

de 11 (FIG.1)

$A$

MONOSTABLE

$t$

2

# FIG.5

CCT DE DETECTION DE FRONTS

750   753   756

751   754   757

759

752   755   758

$i_m$

$j_d$

$j_m$

75

CCT DE DIFFERENCIATION DE PHASE

760   $\Delta\varphi(i_m - j_d)$

$\Delta\varphi$ $\Delta V$

$\Delta\varphi$ $\Delta V$   $\Delta\varphi(i_m - j_m)$

761

76

77

$-t/2$

77P   P

77Q   Q

$+t/2$

77R   R

CCT DE COMPARAISON ET DE DISCRIMINATION DE PHASE

UNITE LOGIQUE DE COMMANDE

784   783

782

781

78

$e = Q \oplus R$

CCT D'AIGUILLAGE

$E_a$   $S_a$

$b_a = P + R$

$p_b = P + \bar{Q}$

$E_b$

$I_a$   72   a (=A) vers 42 (FIG.2)

74

$S_b$

$I_b$   73   b (=B) vers 43 (FIG.2)

de 32 (FIG.2)

i   70

de 33 (FIG.2)

j   71

CCT DE LEVEE D'AMBIGUITE DE PHASE 7

0 044 230

3